# EUROPEAN PATENT SPECIFICATION

(11) **EP 3 651 325 B1**
(45) Date of publication and mention of the grant of the patent: **18.09.2024**
(21) Application number: 19207047.2
(22) Date of filing: 05.11.2019
(51) Int. Cl.: H02K 21/02, H02K 1/18, H02K 3/52, H02K 15/00

(54) **METHOD TO MAKE THE STATOR OF AN ELECTRIC MOTOR**
VERFAHREN ZUR HERSTELLUNG DES STATORS EINES ELEKTROMOTORS
PROCÉDÉ DE FABRICATION DU STATOR D'UN MOTEUR ÉLECTRIQUE

(30) Priority: 06.11.2018 IT 201800010056
(43) Date of publication of application: 13.05.2020
(73) Proprietor: Texa Dynamics S.R.L., 31050 Monastier di Treviso (TV) (IT)
(72) Inventor: Vianello, Bruno, 31050 Monastier di Treviso (IT)
(74) Representative: Citron, Massimiliano

(56) References cited:
- WO-A1-2017/145274
- DE-A1- 10 048 492
- DE-A1- 102016 219 831
- KR-A- 20120 001 891
- US-A1- 2016 241 107
- US-A1- 2018 287 449

## Description

The present invention relates to a method for making a stator of an axial-flux electric motor. The invention also refers to the motor and/or to the stator thus produced.

Axial-flux electric motors, that is with windings that generate a magnetic flux with polar axis parallel to the rotor's rotation axis, have more complex structure than radial-flux motors but are lighter and smaller for the same power.

The main problem with axial-flux electric motors is industrialization. To electrically connect the coils of the windings metal bridges are manually welded onto the coils. The operation is very long and expensive, and with the risk of burning the insulating layer of the coils.

DE 10048492, DE 102016219831, US 2016 241107 and WO 2017/145274 disclose stators comprising an element to electrically connect all the coils in the stator.

The main object of the invention is to improve the present state of the art.

Another object of the invention is to produce the stator of an axial-flux electric motor in a simple and inexpensive way.

Another object of the invention is to produce the stator of an axial-flux electric motor in a repeatable and easily industrializable manner.

These and other objects are achieved by a method and a stator according to the attached independent claims; other advantageous technical features are defined in the dependent claims.

A method is proposed for making a stator of an axial-flux motor, according to claim 1.

E.g. in the circuit the coils, after step (iii), may be connected in series with each other.

Since the rigid element already incorporates all or part of the circuit external to the coils needed to electrically connect them to form a or the set of windings of the stator, the time required to create the circuit external to the coils that connects them is drastically reduced.

The method allows electrically connecting the coil terminals in a fast way, because the position of the electrical conductors is predetermined in the rigid element and remains constant during the operation of electrical connection.

Manual positioning errors of electrical conductors are avoided, because they are already integrated in the rigid element, then being only enough to connect them to the coils in orderly way.

The rigid element also allows stabilizing the position of the coils coupled to it, therefore it is possible to automate through machines the step of electrically connecting the terminals and the electrical conductors together.

The coil terminals may be connected directly to the conductors by creating conductive bridges between a terminal and a said electrical conductor. Or said network of electrical conductors consists of conductive segments arranged spatially to geometrically join separate points of the rigid element located at the ends of the segments, and at each of said points a terminal of a coil is placed, preferably only one terminal of a coil, and the terminals and the ends of the electric segments present at said points are electrically connected to each other, so as to form an overall electric circuit (mesh) in which the coils are connected together, e.g. in series.

According to a preferred variant, said conductors or conductive segments are arranged so as to connect the coils so that, upon power-supplying them, the magnetic field generated by them has equal polarity at every other coil (alternating direction). That is, the field of the coils, seen from the same side, has polarity ..., N, S, N, S, .. and so on along the polar series of coils.

According to the claimed invention, all the coils that make up the stator, not only a subset, are coupled to the rigid element.

According to the claimed invention, on each opposite end of each coil a terminal is arranged, and in the rigid element conductors or said conductive segments are arranged so as to join only terminals that are at the same end of the coils. In particular, said points are substantially located on a same plane and with a constant angular pitch on a circumference, so that also the terminals joined by the conductors or by said conductive segments of the rigid element are substantially on a same plane and arranged on a circumference with a constant angular pitch.

According to a preferred variant, the electrical conductors or said conductive segments are arranged inside the volume of the rigid element positioning them on offset parallel planes, preferably planes orthogonal to the rotation axis of the rotor. In particular the electrical conductors or said conductive segments are connected with said points through (additional) conducting segments that extend parallel to the rotation axis.

To make the stator two of said rigid elements are counter-posed for enclosing the ends of the coils, so as to connect two sets of terminals formed by opposite terminals of each coil by means of conductors arranged on/in a respective rigid element. The electrical conductors of the two rigid elements are spatially arranged so that each coil has one terminal connected with only one electrical conductor present in a rigid element and the other terminal connected with only one electrical conductor present in the other rigid element.

According to a preferred variant, the terminals and the electrical conductors or said conductive segments present at said points are electrically connected together by welding, e.g. laser welding.

According to a preferred variant, the terminals and the electrical conductors, or said conductive segments, present at said points are electrically connected together one at a time in a sequence, e.g. by moving the rigid element with respect to a fixed welding means which performs a welding at a predetermined point.

According to a preferred variant, the electrical conductors in the rigid element are divided into N groups (N ≥ 2, e.g. N = 3) and arranged so that, after the connection is made with the coils, there are N groups of coils connected in series. Thus the coils can be power-supplied with N electrical phases.

According to a preferred variant, a solidifying liquid, e.g. resin, is poured on the coils and the rigid element to create a single body.

To produce said points seats are formed in the rigid element to receive a terminal of a coil. In particular, said seats are made as cavities in the rigid element, and more particularly in each seat only one terminal of a coil is inserted.

According to a preferred variant, the rigid element is formed.by over-injecting a material, e.g. plastic, on a (connected or disconnected) network of (said) electrical, e.g. metallic (e.g. made of copper), conductors, so as to create a single body that incorporates the conductors.

Another aspect of the invention relates to a stator of an axial-flux motor, according to claim 6.

The rigid element advantageously electrically connects the coils to each other and also supports them.

According to a preferred variant of the stator, all the coils are equal to each other.

According to a preferred variant of the stator the rigid element is a disc, more preferably a cup (or a cup-shaped element) with a circular base wherein said base is orthogonal to the axis of the coils and forms a concavity in which the coils are arranged.

According to a preferred variant of the stator, the electrical conductors consist of or comprise arcuate segments lying on arcs of a circumference concentric to said rotation axis. To be able to achieve the required circuits for all the coils without too many complications, preferably said electrical conductors or said arcuate segments are arranged on different planes which are parallel to each other, offset and orthogonal to said rotation axis.

According to the claimed invention, the rigid element comprises a plurality of seats for receiving a respective terminal of a coil, e.g. the end of a said conductor facing into the seat. More preferably, one or each seat is constituted by a pass-through hole in the rigid element, and configured to be able to insert the terminal thereinto. Even more preferably, the seats are arranged at a constant angular pitch on a circumference.

In particular, each said conductor, arcuate or not, is arranged to connect two terminals of two different coils to each other.

According to a preferred variant of the stator, each opposite end of each coil comprises a terminal that protrudes from the coil extending parallel to the coil axis. This type of terminal, inserted into said seat, facilitates the coupling between the coils and the rigid element.

Preferably the stator comprises, in correspondence with one or each seat, an element (e.g. a ring), which is refractory to heat and/or an electrical insulator, mounted to surround or delimit said seat.

According to a preferred variant of the stator, it comprises weldings between the coil terminals and the ends of the electrical conductors.

According to a preferred variant of the stator, the rigid element comprises electrical conductors arranged to connect only terminals that are at the same end of the coils. In particular, said seats are substantially on a same plane orthogonal to the rotation axis and arranged on a circumference, so that also the terminals joined by the conductors of the rigid element are substantially on a same plane and arranged on a circumference.

Preferably, the stator is formed by two rigid elements as defined above and counter-posed to each other to enclose the coils at their ends, preferably within said two concavities of the cup. Every rigid element contains electrical conductors arranged to connect the coil terminals which are on the same side (i.e. in the same half-space with respect to a plane which is orthogonal to the axis of the coils - or to the axis of rotation - and passing through the center of a coil). In this case the winding of a coil, after the connection, forms a conductive bridge between an electrical conductor present in one rigid element and an electrical conductor present in the other rigid element. The electrical conductors of the two rigid elements are spatially organized so that each coil has a terminal connected with only one electrical conductor present in one rigid element and the other terminal connected with only one electrical conductor present in the other rigid element.

According to a preferred variant of the stator, the electrical conductors in a or each rigid element are subdivided into N groups (N ≥ 2, e.g. N = 3) and arranged so that, once connected with the coils, there are N groups of coils connected to each other, e.g. in series, each coil being included in one single group and isolated from the other groups.

According to a preferred variant of the stator, the electrical conductors of a or each rigid element form a network or graph of conductors provided with conducting segments, each segment reaching a terminal of a coil. The segments of the network or graph may all be connected to each other or be divided into groups of isolated segments, in which case the winding of a coil forms a conductive bridge between two groups of different segments.

The rigid element comprises seats for receiving a terminal of a coil. In particular, said seats are constituted of cavities in the rigid element, and more specifically each seat is configured for inserting thereinto only one terminal.

According to a preferred variant, the rigid element is made out of a material, e.g. plastic, over-injected on a network of electrical, e.g. metallic (e.g. copper), conductors so that the rigid element is a one-piece body which incorporates the conductors.

According to a preferred variant, the stator comprises a solidified resin poured over the coils and the rigid element to create a one-piece body.

Another aspect of the invention relates to the motor comprising the stator as defined above.

Further advantages will be clear from the following description, which refers to a preferred embodiment of a stator in which:
- figure 1 shows a three-dimensional view of a plurality of coils of the stator;
- figure 2 shows a three-dimensional view of a connector of the stator;
- figure 3 shows three-dimensional views of internal details of the connector of fig. 2;
- figure 4 shows in plan view the connector of fig. 3;
- figure 5 shows in cross-section the connector of fig. 4 according to the section plane V-V;
- figure 6 shows in three-dimensional and exploded view the stator during assembly;
- figure 7 shows the assembled stator;
- figure 8 shows a three-dimensional diagram of conductors internal to the stator;
- figure 9 shows an assembled stator.

The construction steps of an axial-flux electric motor's stator will now be described, together with the components that characterize it. To not crowd the drawings multiple or repeated parts are not all indicated by numbers.

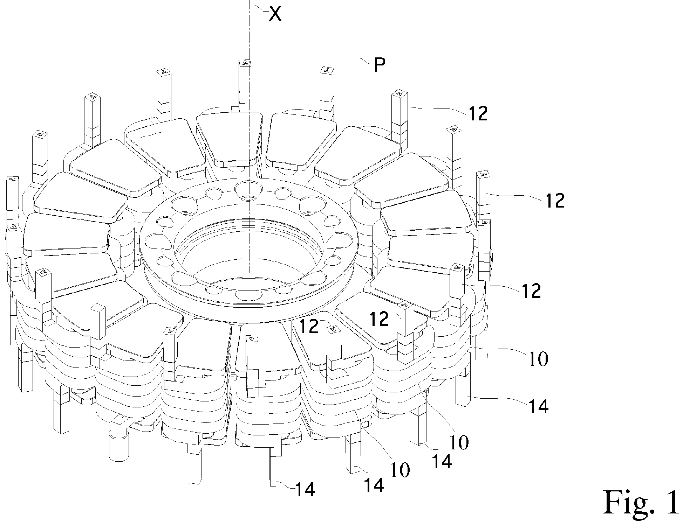

The stator 100 comprises (fig. 1) a complete circular series of coils 10 with constant angular pitch.

The winding of each coil 10 is such as to generate a magnetic field with polar axis P parallel to the rotation axis X of a rotor of the motor (axis which also coincides with an axis of polar symmetry of the stator 100).

Each coil 10 is equipped with two power-supply terminals 12, 14, each located respectively at an opposite end of the coil 10. The terminals 12, 14 are formed by extensions of the windings which protrude from the windings, in opposite directions and on the same side of the coil 10, parallel to the P axis.

In the example, advantageously the coils 10 are all equal, for better process standardization.

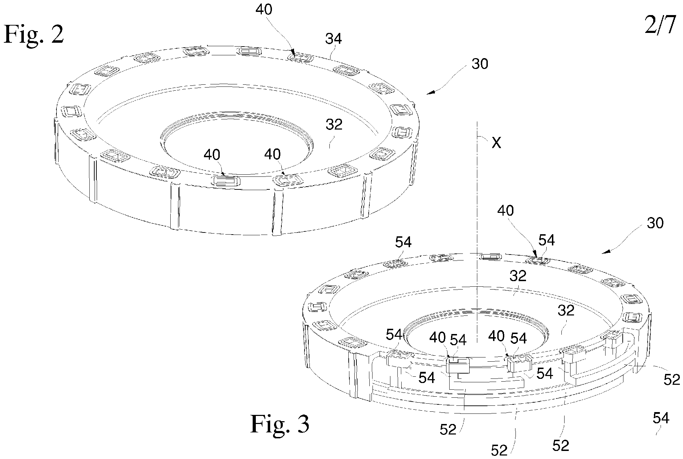

The terminals 12, 14 of each coil 10 are electrically connected to each other, in a suitable circuit configuration, by two rigid connectors 30 (fig. 2) mounted at and on the ends of the coils 10.

For descriptive convenience we can call one connector 30 as "upper connector" and the other as "lower connector".

Each connector 30 is preferably disc-shaped, e.g. in plastic, equipped with a central flat part 32 and a peripheral, e.g. circular and/or raised, edge 34.

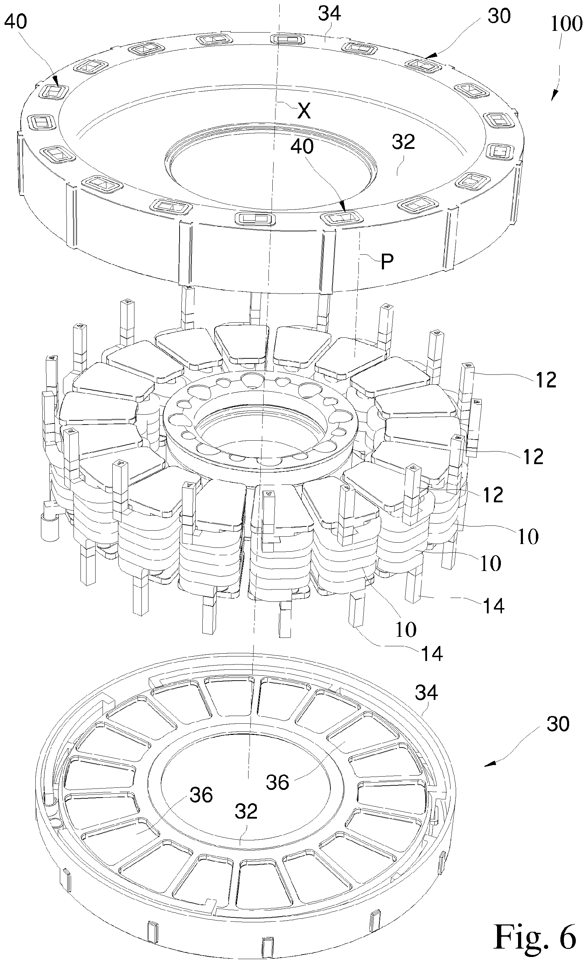

The central part 32 preferably comprises a circular series of recesses 36 (see fig. 6) to house the heads of the coils 10. Each recess 36 has preferably a plan complementary to the head of the coils 10.

The edge 34 comprises a circular series of pass-through holes 40 in which the terminals 12, 14 are, one by one, (fig. 6) insertable and inserted. In the holes 40 of the upper disc 30 there are orderly placed the terminals 14 of all the coils 10, and in the holes 40 of the lower disc 30 there are orderly placed the terminals 12 of all the coils 10.

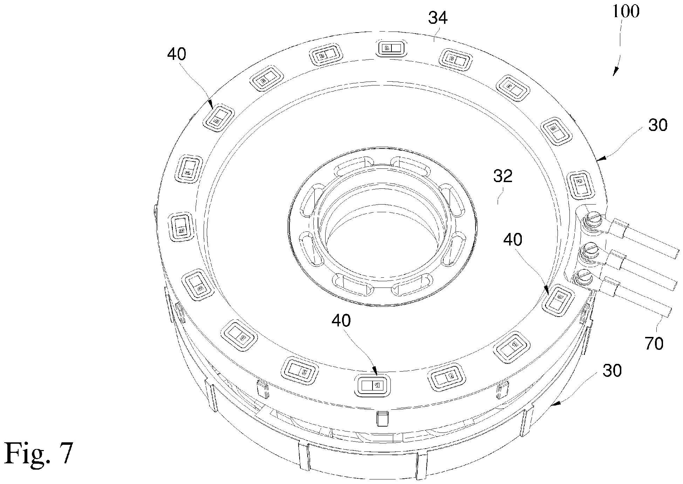

The two discs 30 are applied on opposite sides of the circular series of coils 10 (fig. 6) so as to enclose them almost completely. Once assembly is complete, the coils 10 end up enclosed between the two discs 30, whose central part 32 ends up orthogonal to the X axis, and the terminals 12, 14 are all inserted in the holes 40 (fig. 7) of two discs 30.

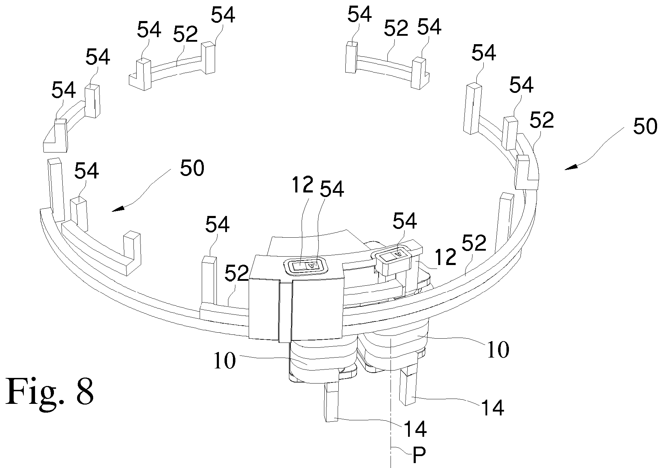

Within each disc 30, e.g. inside the edge 34, electrical conductors 50 used to connect the terminals 12, 14, see also fig. 8, are embedded.

The electrical conductors 50 in the illustrated example are arcuate segments 52 of electrically conductive material with the same radius of curvature of the edge 34. Such segments have free ends which protrude and/or appear in different holes 40 of the same disc 30. Then, when the discs 30 are applied on/to the coils 10, the electrical conductors 50 and the terminals 12, 14 come to being close to - or in contact with - each other at the holes 40, and it is easy to permanently connect them electrically, e.g. by welding.

When welding is completed, the coils 10 are all electrically connected to the electrical conductors 50, i.e. the terminals 12 are all electrically connected to at least one of the electrical conductors 50 of the lower disc 30 and the terminals 14 are all electrically connected to at least one of the electrical conductors 50 of the upper disc 30.

Preferably, each hole 40 accommodates only one terminal 12 or 14 of one coil 10, which is connected between only one conductor 50 in the upper disc 30 and only one conductor 50 in the lower disc 30.

Altogether, then, the coils 10 become part of, and are connected to each other by, an electrically conductive path formed by the conductors electrical 50.

The set of coils 10 thus connected by the electrical conductors 50 of the two discs 30 altogether forms an electrical circuit, the topology of which is preestablished and/or designable by the configuration and/or position of the electric conductors 50. In this circuit the coils 10 actually behave like bipoles constituting an "electric bridge" between the electrical conductors 50 of the two discs 30.

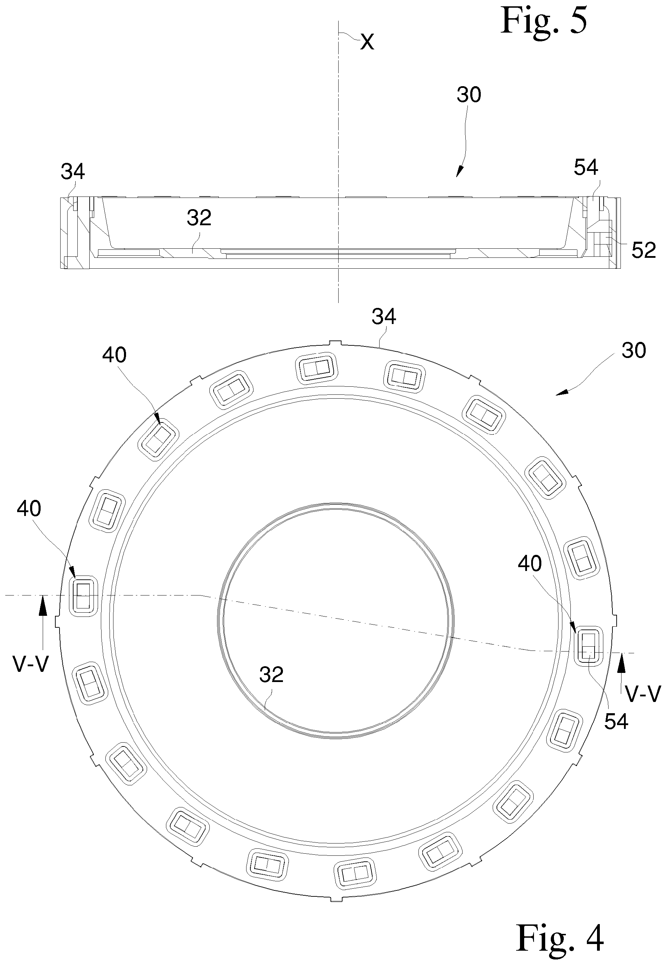

The various arched segments 52 are either coplanar or placed on parallel, offset planes (see also fig. 5 and 8).

To facilitate the internal structure of the electrical conductors 50, it is preferred that the conductors 50 are arranged according to a three-dimensional pattern, that is distributed on planes being parallel to each other and offset (for example, parallel to the plane which contains the holes 40 and/or orthogonal to the X or P axis). In this configuration the electrical conductors 50 comprise - or consist of - connection conductors preferably formed by arcuate segments 52 and linear segments 54. The linear segments 54 are parallel to the P or X axis and are arranged for reaching the holes 40 from the inside of the edge 34.

Preferably in the holes 40 there are ceramic rings 60, for the purpose of isolating the holes 40 from the body of the edge 34.

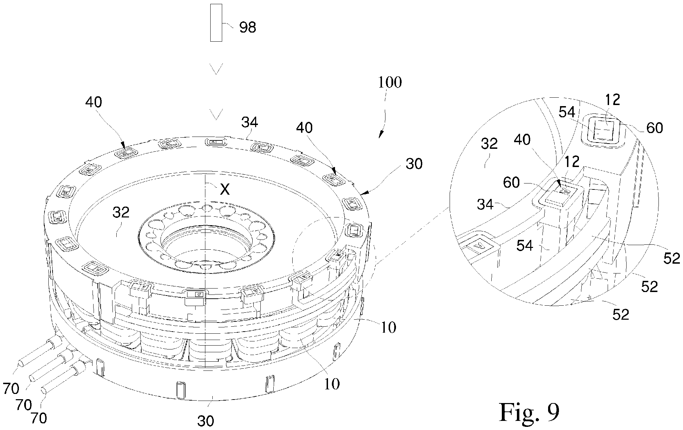

Fig. 9 shows a stator 100 in which the electrical conductors 50 contained in the discs 30 create for - and with - the coils 10 three independent circuits, accessible via three output conductors 70. That is to say, the electric conductors 50, when connected to the coils 10, have a configuration such as to divide the coils 10 into three independent groups, each group of coils 10 being formed by coils electrically in series and isolated from the coils of the other groups.

The three independent circuits are exploitable for a three-phase power-supply of the stator.

In general, outside the discs 30 there are terminals connected to the ends of each independent circuit.

Fig. 8 shows a preferred step of electrical connecting the terminals 12, 14 and the electrical conductors 50, by welding via a laser 98. The advantage is to be able to rotate the stator 100 with respect to the laser 98 so as to bring each hole 40 in sequence under the laser 98 to weld therein a conductor 50 to a terminal 12 or 14.

## Claims

1. Method for making a stator (100) of an axial-flux motor, wherein the stator (100) comprises coils (10), provided with two power-supply terminals (12, 14) located respectively at an opposite end of each coil (10), the coils (10) being arranged at a constant angular pitch on a circumference, so that the polar axis (P) of the magnetic field generated by them is parallel to the rotation axis (X) of a rotor of the motor,
with the steps of
(i) taking or producing a rigid element (30) incorporating in its volume a network of electrical conductors (50) so spatially arranged as to geometrically connect separate points of the rigid element,
(ii) placing the terminals (12, 14) of the coils (10) near the rigid element (30), and
(iii) electrically connecting the terminals (12, 14) and the electrical conductors (50) to each other, so as to include the coils (10) in an overall electric circuit formed by the electric conductors (50),
wherein, to make the stator, two of said rigid elements are counter-posed for enclosing the ends of the coils, so as to connect two sets of terminals formed by opposite terminals of each coil by means of conductors arranged in a respective rigid element,
the electrical conductors of the two rigid elements are spatially arranged so that each coil has one terminal connected with only one electrical conductor present in a rigid element and the other terminal connected with only one electrical conductor present in the other rigid element,
wherein, to produce said points, seats are formed in the rigid element to receive a terminal of a coil.

2. Method according to claim 1, wherein said seats are made as cavities in the rigid element.

3. Method according to claim 2, wherein in each seat only one terminal of a coil is inserted.

4. Method according to claim 1 or 2 or 3, wherein said conductors are arranged so as to connect the coils so that, by power-supplying them, the magnetic fields generated by them have the same polarity every other coil.

5. Method according to claim 1 or 2 or 3 or 4, wherein the terminals and the electrical conductors, or said conductive segments, present at said points are electrically connected together one at a time in a sequence by moving the rigid element with respect to a fixed welding means which performs a welding at a predetermined point.

6. Stator (100) of an axial-flux motor, comprising:
- coils (10) that are
equipped with two power-supply terminals (12, 14), located respectively at an opposite end of each coil (10) and
arranged at a constant angular pitch on a circumference such that the polar axis (P) of the magnetic field generated by the winding of the coils is parallel to the rotation axis (X) of a rotor of the motor,
- two rigid elements (30) to which the coils (10) are coupled, in the volume of each rigid element being embedded electrical conductors (50) arranged in such a way as to electrically interconnect all the terminals of the coils,
wherein
the two rigid elements (30) are counter-posed for enclosing the ends (12, 14) of the coils, so as to connect two sets of terminals formed by opposite terminals of each coil by means of conductors (50) arranged in a respective rigid element.
the electrical conductors (50) of the two rigid elements (30) being spatially arranged so that each coil (10) has one terminal (12) connected with only one electrical conductor (50) present in a rigid element (30) and the other terminal (14) connected with only one electrical conductor (50) present in the other rigid element (30),
each rigid element (50) at said points comprising a plurality of seats (40) for housing a respective terminal of a coil (10).

7. Stator (100) according to claim 6, wherein said seats (40) are constituted of cavities in the rigid element (30), each seat (40) being configured for inserting thereinto only one terminal (12, 14).

8. Stator (100) according to claim 7, wherein one or each seat (40) is constituted by a pass-through hole in the rigid element (30).

9. Stator (100) according to claim 7 or 8, wherein the seats (40) are arranged at a constant angular pitch on a circumference.

10. Stator (100) according to claim 6 or 7 or 8 or 9, wherein the rigid element (30) is cup-shaped and with a circular base (32), where said base (32) is orthogonal to the axis (P) of the coils and forms a concavity in which the coils (10) are arranged.

11. Stator (100) according to claim 6 or 7 or 8 or 9 or 10, wherein the electrical conductors (50) consist of or comprise arcuate segments (52) which lie on circumference arches concentric to said rotation axis (X), said arcuate segments being arranged on different planes which are parallel to each other, offset and orthogonal to said rotation axis (X).

12. Stator (100) according to any preceding claim,
comprising, in correspondence with one or each seat (40), an element which is refractory to heat and/or an electrical insulator, mounted to surround or delimit said seat (40).

13. Stator (100) according to any preceding claim, wherein the rigid elements are made out of a material over-injected on a network of electrical conductors so that a rigid element is a one-piece body which incorporates the conductors.

14. Stator (100) according to any preceding claim, comprising a solidified resin poured over the coils and a rigid element to create a one-piece body.

15. Motor comprising a stator as in any preceding claim 6 to 14.

## Patentansprüche

1. Verfahren zur Herstellung eines Stators (100) eines Axialflussmotors, wobei der Stator (100) Spulen (10) umfasst, die mit zwei Stromversorgungsanschlüssen (12, 14) versehen sind, die sich jeweils an einem gegenüberliegenden Ende jeder Spule (10) befinden, wobei die Spulen (10) in einem konstanten Winkelabstand auf einem Kreisumfang angeordnet sind, so dass die Polarachse (P) des von ihnen erzeugten Magnetfelds parallel zur Rotationsachse (X) eines Rotors des Motors ist,
mit den Schritten von
(i) Nehmen oder Herstellen eines starren Elements (30), das in seinem Volumen ein Netzwerk aus elektrischen Leitern (50) enthält, die räumlich so angeordnet sind, dass sie getrennte Punkte des starren Elements geometrisch verbinden,
(ii) Platzieren der Anschlüsse (12, 14) der Spulen (10) in der Nähe des starren Elements (30), und
(iii) elektrisches Verbinden der Anschlüsse (12, 14) und der elektrischen Leiter (50) miteinander, um die Spulen (10) in einen durch die elektrischen Leiter (50) gebildeten Gesamtstromkreis einzubeziehen,
**wobei**
Um den Stator herzustellen, werden zwei der starren Elemente gegenübergestellt, um die Enden der Spulen einzuschließen, um so zwei Sätze von Anschlüssen, die durch gegenüberliegende Anschlüsse jeder Spule gebildet werden, mittels Leitern zu verbinden, die in einem jeweiligen starren Element angeordnet sind,
die elektrischen Leiter der beiden starren Elemente sind räumlich so angeordnet, dass jede Spule einen Anschluss hat, der mit nur einem elektrischen Leiter verbunden ist, der in einem starren Element vorhanden ist, und den anderen Anschluss, der mit nur einem elektrischen Leiter verbunden ist, der in dem anderen starren Element vorhanden ist,
wobei zur Herstellung der Punkte Sitze im starren Element geformt werden, um einen Anschluss einer Spule aufzunehmen.

2. Verfahren nach Anspruch 1, wobei die Sitze als Hohlräume im starren Element hergestellt werden.

3. Verfahren nach Anspruch 2, wobei in jeden Sitz nur ein Anschluss einer Spule eingesteckt wird.

4. Verfahren nach Anspruch 1 oder 2 oder 3, wobei die Leiter so angeordnet sind, dass sie die Spulen so verbinden, dass bei ihrer Stromversorgung die von ihnen erzeugten Magnetfelder in jeder zweiten Spule die gleiche Polarität aufweisen.

5. Verfahren nach Anspruch 1 oder 2 oder 3 oder 4, wobei die Anschlüsse und die elektrischen Leiter oder die leitenden Segmente, die an den Punkten vorhanden sind, nacheinander einzeln elektrisch miteinander verbunden werden, indem das starre Element in Bezug auf ein festes Schweißmittel bewegt wird, das an einem vorgegebenen Punkt eine Schweißung durchführt.

6. Stator (100) eines Axialflussmotors, umfassend:
- Spulen (10), die
mit zwei Stromversorgungsanschlüssen (12, 14) ausgestattet, die sich jeweils an einem gegenüberliegenden Ende jeder Spule (10) befinden, und
in einem konstanten Winkelabstand auf einem Kreisumfang angeordnet, so dass die Polarachse (P) des durch die Wicklung der Spulen erzeugten Magnetfelds parallel zur Rotationsachse (X) eines Rotors des Motors verläuft,
- zwei starre Elemente (30), an die die Spulen (10) gekoppelt sind, wobei in das Volumen jedes starren Elements elektrische Leiter (50) eingebettet sind, die so angeordnet sind, dass sie alle Anschlüsse der Spulen elektrisch miteinander verbinden,
wobei
die beiden starren Elemente (30) sind einander gegenüberliegend angeordnet, um die Enden (12, 14) der Spulen zu umschließen, um so zwei Sätze von Anschlüssen, die durch gegenüberliegende Anschlüsse jeder Spule gebildet werden, mittels Leitern (50) zu verbinden, die in einem jeweiligen starren Element angeordnet sind.
wobei die elektrischen Leiter (50) der beiden starren Elemente (30) räumlich so angeordnet sind, dass jede Spule (10) einen Anschluss (12) aufweist, der mit nur einem in einem starren Element (30) vorhandenen elektrischen Leiter (50) verbunden ist, und der andere Anschluss (14) mit nur einem in dem anderen starren Element (30) vorhandenen elektrischen Leiter (50) verbunden ist,
wobei jedes starre Element (50) an diesen Punkten eine Vielzahl von Sitzen (40) zur Aufnahme eines jeweiligen Anschlusses einer Spule (10) umfasst.

7. Stator (100) nach Anspruch 6, wobei die Sitze (40) aus Hohlräumen im starren Element (30) bestehen, wobei jeder Sitz (40) zum Einsetzen nur eines Anschlusses (12, 14) konfiguriert ist.

8. Stator (100) nach Anspruch 7, wobei ein oder jeder Sitz (40) durch ein Durchgangsloch im starren Element (30) gebildet ist.

9. Stator (100) nach Anspruch 7 oder 8, wobei die Sitze (40) in einem konstanten Winkelabstand auf einem Umfang angeordnet sind.

10. Stator (100) nach Anspruch 6 oder 7 oder 8 oder 9, wobei das starre Element (30) becherförmig ist und eine kreisförmige Basis (32) aufweist, wobei die Basis (32) orthogonal zur Achse (P) der Spulen ist und eine Konkavität bildet, in der die Spulen (10) angeordnet sind.

11. Stator (100) nach Anspruch 6 oder 7 oder 8 oder 9 oder 10, wobei die elektrischen Leiter (50) aus bogenförmigen Segmenten (52) bestehen oder diese umfassen, die auf Umfangsbögen liegen, die konzentrisch zur Rotationsachse (X) sind, wobei die bogenförmigen Segmente auf unterschiedlichen Ebenen angeordnet sind, die parallel zueinander, versetzt und orthogonal zur Rotationsachse (X) sind.

12. Stator (100) nach einem der vorhergehenden Ansprüche, der in Übereinstimmung mit einem oder jedem Sitz (40) ein wärmebeständiges Element und/oder einen elektrischen Isolator umfasst, der so angebracht ist, dass er den Sitz (40) umgibt oder begrenzt.

13. Stator (100) gemäß einem der vorhergehenden Ansprüche, wobei die starren Elemente aus einem Material bestehen, das auf ein Netzwerk aus elektrischen Leitern aufgespritzt ist, so dass ein starres Element ein einteiliger Körper ist, der die Leiter enthält.

14. Stator (100) nach einem der vorhergehenden Ansprüche, der ein über die Spulen gegossenes verfestigtes Harz und ein starres Element umfasst, um einen einteiligen Körper zu erzeugen.

15. Motor mit einem Stator gemäß den Ansprüchen 6 bis 14.

## Revendications

1. Procédé de réalisation d'un stator (100) de moteur à flux axial, dans lequel le stator (100) comprend des bobines (10), munies de deux bornes d'alimentation (12, 14) situées respectivement à une extrémité opposée de chaque bobine (10), les bobines (10) étant disposées selon un pas angulaire constant sur une circonférence, de sorte que l'axe polaire (P) du champ magnétique généré par celles-ci soit parallèle à l'axe de rotation (X) d'un rotor du moteur,
avec les étapes de
(i) prendre ou réaliser un élément rigide (30) incorporant dans son volume un réseau de conducteurs électriques (50) disposés spatialement de manière à relier géométriquement des points distincts de l'élément rigide,
(ii) placer les bornes (12, 14) des bobines (10) à proximité de l'élément rigide (30), et
(iii) connecter électriquement les bornes (12, 14) et les conducteurs électriques (50) les uns aux autres, de manière à inclure les bobines (10) dans un circuit électrique global formé par les conducteurs électriques (50),
**où**
pour réaliser le stator, deux desdits éléments rigides sont opposés pour enserrer les extrémités des bobines, de manière à relier deux jeux de bornes formés par les bornes opposées de chaque bobine au moyen de conducteurs disposés dans un élément rigide respectif,
les conducteurs électriques des deux éléments rigides sont disposés spatialement de manière à ce que chaque bobine présente une borne reliée à un seul conducteur électrique présent dans un élément rigide et l'autre borne reliée à un seul conducteur électrique présent dans l'autre élément rigide,
dans lequel, pour produire lesdites pointes, des sièges sont formés dans l'élément rigide pour recevoir une borne d'une bobine.

2. Procédé selon la revendication 1, dans lequel lesdits sièges sont réalisés sous forme de cavités dans l'élément rigide.

3. Procédé selon la revendication 2, dans lequel dans chaque siège une seule borne d'une bobine est insérée.

4. Procédé selon la revendication 1 ou 2 ou 3, dans lequel lesdits conducteurs sont disposés de manière à relier les bobines de manière à ce qu'en les alimentant, les champs magnétiques générés par celles-ci aient la même polarité une bobine sur deux.

5. Procédé selon la revendication 1 ou 2 ou 3 ou 4, dans lequel les bornes et les conducteurs électriques, ou lesdits segments conducteurs, présents auxdits points sont connectés électriquement entre eux un à un dans une séquence en déplaçant l'élément rigide par rapport à un moyen de soudage fixe qui effectue un soudage en un point prédéterminé.

6. Stator (100) de moteur à flux axial, comprenant :
- des bobines (10) qui sont
équipé de deux bornes d'alimentation (12, 14) situées respectivement à une extrémité opposée de chaque bobine (10), et
disposé à pas angulaire constant sur une circonférence telle que l'axe polaire (P) du champ magnétique généré par le bobinage des bobines soit parallèle à l'axe de rotation (X) d'un rotor du moteur,
- deux éléments rigides (30) auxquels sont couplées les bobines (10), dans le volume de chaque élément rigide étant noyés des conducteurs électriques (50) disposés de manière à interconnecter électriquement toutes les bornes des bobines,
où
les deux éléments rigides (30) sont opposés pour enserrer les extrémités (12, 14) des bobines, de manière à relier deux jeux de bornes formés par les bornes opposées de chaque bobine au moyen de conducteurs (50) disposés de manière respective élément rigide.
les conducteurs électriques (50) des deux éléments rigides (30) étant disposés spatialement de telle sorte que chaque bobine (10) possède une borne (12) connectée à un seul conducteur électrique (50) présent dans un élément rigide (30) et l'autre borne (14) reliée à un seul conducteur électrique (50) présent dans l'autre élément rigide (30),
chaque élément rigide (50) auxdits points comprenant une pluralité de sièges (40) pour loger une borne respective d'une bobine (10).

7. Stator (100) selon la revendication 6, dans lequel lesdits sièges (40) sont constitués de cavités dans l'élément rigide (30), chaque siège (40) étant configuré pour y insérer une seule borne (12, 14).

8. Stator (100) selon la revendication 7, dans lequel un ou chaque siège (40) est constitué par un trou traversant dans l'élément rigide (30).

9. Stator (100) selon la revendication 7 ou 8, dans lequel les sièges (40) sont disposés à pas angulaire constant sur une circonférence.

10. Stator (100) selon la revendication 6 ou 7 ou 8 ou 9, dans lequel l'élément rigide (30) est en forme de coupelle et à base circulaire (32), où ladite base (32) est orthogonale à l'axe (P) des bobines et forme une concavité dans laquelle sont disposées les bobines (10).

11. Stator (100) selon la revendication 6 ou 7 ou 8 ou 9 ou 10, dans lequel les conducteurs électriques (50) sont constitués de ou comprennent des segments arqués (52) qui reposent sur des arceaux de circonférence concentriques audit axe de rotation (X), ledit des segments arqués étant disposés sur des plans différents qui sont parallèles entre eux, décalés et orthogonaux audit axe de rotation (X).

12. Stator (100) selon l'une quelconque des revendications précédentes, comprenant, en correspondance avec un ou chaque siège (40), un élément réfractaire à la chaleur et/ou un isolant électrique, monté pour entourer ou délimiter ledit siège (40).

13. Stator (100) selon l'une quelconque des revendications précédentes, dans lequel les éléments rigides sont réalisés dans un matériau surinjecté sur un réseau de conducteurs électriques de sorte qu'un élément rigide est un corps monobloc qui incorpore les conducteurs.

14. Stator (100) selon l'une quelconque des revendications précédentes, comprenant une résine solidifiée coulée sur les bobines et un élément rigide pour créer un corps monobloc.

15. Moteur comprenant un stator comme dans l'une quelconque des revendications précédentes 6 à 14.
